## Europäisches Patentamt
## European Patent Office
## Office européen des brevets

(19)

(11) Numéro de publication: **0 008 555**
**B1**

(12) **FASCICULE DE BREVET EUROPEEN**

(45) Date de publication du fascicule du brevet: **10.02.82**

(51) Int. Cl.³: **F 16 B 7/04**

(21) Numéro de dépôt: **79400558.7**

(22) Date de dépôt: **07.08.79**

(54) Système d'assemblage pour la réalisation d'ossatures et de constructions métalliques légères.

(30) Priorité: **17.08.78 FR 7823999**

(43) Date de publication de la demande:
**05.03.80 Bulletin 80/5**

(45) Mention de la délivrance du brevet:
**10.02.82 Bulletin 82/6**

(84) Etats contractants désignés:
**BE CH DE GB IT NL SE**

(56) Documents cités:
**FR - A - 1 332 686**
**FR - A - 2 280 338**
**GB - A - 1 161 946**

(73) Titulaire: **Société d'Exploitation des Etablissements Pourteau Société anonyme 110 Avenue Georges Clémenceau F-94360 Bry sur Marne (FR)**

(72) Inventeur: **Robillard, Roger 2 allée François Villon F-91800 Brunoy (FR)**

(74) Mandataire: **Laget, Jean-Loup et al, Cabinet Pierre Loyer 18, Rue de Mogador F-75009 Paris (FR)**

Courier Press, Leamington Spa, England.

## Système d'assemblage pour la réalisation
## d'ossatures et de constructions métalliques légères

La présente invention se rapporte d'une façon générale à la réalisation d'ossatures et de constructions métalliques légères pouvant être utilisées pour des applications multiples, fixes ou temporaires, telles que casiers de rangement et de stockage, passerelles de visite, plates-formes, estrades, escaliers, supports de tous types, ossatures utilisables dans l'aéronautique, et ensembles d'équipements divers.

Elle a notamment pour but de créer un système composé d'un très petit nombre de pièces normalisées, pouvant être utilisées de façon universelle pour la réalisation de ces ossatures ou constructions métalliques légères.

Il est déjà connu, pour la réalisation d'ossatures et de constructions métalliques légères, d'utiliser des tubes ou profilés et des raccords, colliers ou dispositifs équivalents, permettant l'assemblage des tubes ou profilés entre eux, ainsi éventuellement qu'avec d'autres éléments (Brevet français 1 332 686). Toutefois, un problème qui se pose dans les réalisations de ce type résulte du décalage entre les plans d'assemblage lors de l'utilisation de colliers ou raccords simples. Ainsi, si l'on désire accoupler avec un tube ou profilé vertical, formant par exemple un montant, deux autres tubes ou profilés orientés orthogonalement par rapport au premier, c'est-à-dire dans deux directions horizontales, l'emploi des colliers ou raccords simples existants aboutit généralement à un décalage de niveau des deux tubes ou profilés ainsi raccordés. Pour résoudre ce problème, on est alors amené à prévoir des colliers ou raccords multiples plus complexes, ce qui augmente le prix de revient et accroît le nombre des éléments qui sont nécessaires à la réalisation d'une ossature ou construction métallique.

Il est encore connu de réaliser un assemblage entre un profilé muni de parties en queue d'aronde et une autre pièce au moyen de pinces enserrant le profil en queue d'aronde (Demande de brevet français 2 280 338). Toutefois, le systeme connu permet simplement l'assemblage de deux profilés qui ne sont pas de même forme, au moyen de pièces qui n'autorisent pas une relation angulaire différente de 90° entre les profilés.

Une autre construction connue réalise également l'assemblage de profilés munis de parties d'accrochage au moyen de pinces s'engageant sur ces parties (Brevet britannique 1 161 946). Mais ici encore les profilés ne peuvent pas être assemblés dans une position différente de 90°.

Un autre but de l'invention est de remédier aux inconvénients des agencements connus.

L'invention est matérialisée dans un système d'assemblage pour la réalisation d'ossatures et de constructions métalliques légères, comprenant des profilés creux munis sur chacune de leurs faces d'un profil en queue d'aronde et des éléments d'assemblage en forme de pinces destinés à venir enserrer les profils en queue d'aronde pour l'assemblage en s'appliquant des deux côtés d'un tel profil en queue d'aronde, ces pinces étant supportées par une pièce d'assemblage dont une extrémité en forme de queue peut s'emboîter dans la cavité intérieure d'un autre élément ou profilé de l'ossature ou de la construction, caractérisé en ce que cette queue porte une patte d'accouplement de part et d'autre de laquelle les pinces réalisant l'assemblage avec un profilé sont serrées au moyen d'un boulon ou élément analogue, ces pinces étant orientables par rapport à cette patte d'accouplement autour de l'axe de ce boulon pour permettre des assemblages entre les profilés selon toute relation angulaire désirée.

Suivant un mode de réalisation judicieux, la patte d'accouplement de la pièce d'assemblage ménage sur chacune de ses faces une portée de forme circulaire, et les pinces présentent une partie de forme circulaire par laquelle elles s'appliquent sur ces faces de la patte d'accouplement pour permettre l'assemblage entre les profilés dans toute relation angulaire désirée. Ainsi, les pinces peuvent avoir, à l'opposé de griffes de forme rectiligne, un contour semi-circulaire, ce qui permet de les fixer dans une position quelconque, en principe selon un débattement de 180°, par rapport à la patte d'accouplement de la pièce d'assemblage et ainsi par rapport à l'orientation du profilé associé à cette patte d'accouplement, laquelle presente également un bord semicirculaire à l'opposé de la queue de la pièce d'assemblage. On peut ainsi orienter des profilés selon toutes les directions désirées à l'intérieur d'une même ossature ou construction, par exemple pour la réalisation de contrefiches, de jambes de force, etc.

Les parties formant griffes des pinces peuvent être profilées et dimensionnées par rapport aux fentes séparant les profils ou nervures en queue d'aronde adjacents d'un profilé de telle sorte que les griffes de deux pinces juxtaposées associées à des pièces d'assemblage et à des profilés différents puissent s'engager à un même niveau dans ladite fente. Ceci permet, à partir d'un nombre de pièces très réduit, qui correspond aux éléments de base du système, de réaliser, dans une ossature ou construction métallique, des "noeuds" d'assemblage permettant une orientation orthogonale de plusieurs profilés dans un même plan.

Suivant un mode de réalisation paraissant judicieux, les pièces d'assemblage sont dimensionnées de telle sorte que la patte d'accouplement et les pinces avec leurs griffes soient comprises en totalité dans la section droite globale des profilés, de sorte qu'aucun élément ne fait saillie par rapport à cette section droite et que l'on peut ainsi assembler ou réunir les profilés selon toutes les dispositions désirables, sans aucune gêne aux noeuds d'assemblage.

Chaque pièce d'assemblage peut comporter alors une partie en forme de collet servant de butée lors de l'emmanchement de la queue de cette pièce d'assemblage dans le profil associé, la patte d'accouplement s'étendant à partir de ce collet. Ce dernier a judicieusement une forme carrée adaptée au contour extérieur des profilés, ce qui évite ici encore toute saillie ou protubérance par rapport à l'encombrement en section droite des profilés.

Les pinces sont constituées judicieusement par des pièces en forme de cuvettes munies d'au moins une griffe, les parties formant le fond des cuvettes de deux pinces conjuguées venant s'appliquer de part et d'autre de la patte d'accouplement d'une pièce d'assemblage, les pinces étant maintenues au moyen d'un boulon traversant des trous prévus dans le fond des cuvettes et dans la patte d'accouplement, ainsi que d'un écrou conjugué, la tête du boulon et l'écrou étant logés dans les dépressions des cuvettes, c'est-à-dire ne faisant pas saillie par rapport à l'encombrement en section droite des profilés.

Les éléments d'assemblage constitués par les pinces avec leurs griffes peuvent être utilisés pour assurer la fixation, en un point quelconque d'un profilé d'une ossature ou construction métallique légère, d'autres éléments comportant simplement une partie destinée à être adaptée entre les pinces au lieu de la patte d'accouplement de la pièce d'assemblage décrite précédemment. On peut ainsi envisager la fixation de goussets reliés à des marches d'escaliers, à une plate-forme, etc.

La forme particulière des profilés permet la combinaison avec l'ensemble réalisé d'autres éléments additionnels encore, munis d'un profilage s'adaptant sur les nervures en queue d'aronde des faces des profilés. Ainsi, on peut prévoir si désiré des pièces ou éléments formant raidisseurs, munis d'une âme continue et comportant vers chaque extrémité de celle-ci une partie femelle adaptée au profil en queue d'aronde des profilés précités. Il est également possible de prévoir des éléments en caoutchouc, matière plastique ou autre, pouvant servir de butoirs, de mains-courantes ou de parties analogues, présentant tout profil désiré et munis d'un profilage femelle adapté à la forme des profils en queue d'aronde des faces du profilé.

On constate que la mise en oeuvre d'un tel système peut être assurée d'une manière très simple, sans l'aide d'aucun outillage sophistiqué et sans devoir faire appel à une main-d'oeuvre qualifiée. L'universalité d'assemblagè des éléments en nombre très réduit mentionnés précédemment permet en effet de réaliser toutes les combinaisons d'assemblage requises par l'utilisation de l'ossature. Il suffit alors en effet d'adapter les pièces sur le profil en queue d'aronde d'un profilé et de les bloquer par rapport à la pièce d'assemblage conjuguée par le serrage d'un seul écrou sur son boulon.

La réalisation des éléments en aluminium par exemple permet d'obtenir une construction légère et esthétique, avec une absence totale de corrosion.

En cas d'ossatures ou de constructions temporaires, on peut également récupérer la totalité des éléments ayant servi à leur établissement, en vue de leur réutilisation, ce qui représente une économie non négligeable. Les seuls éléments devant être adaptés sont en effet les profilés qui, bien entendu, doivent être coupés à longueur chaque fois que cela est désirable.

L'invention concerne encore les ossatures et constructions métalliques légères réalisées à partir du système d'assemblage décrit ci-avant.

La description qui va suivre, faite en regard des dessins annexés donnés à titre non limitatif, permetra de mieux comprendre l'invention.

La Fig. 1 est une vue en perspective éclatée montrant les différents éléments du système d'assemblage suivant l'invention.

La Fig. 2 est une vue prise dans la direction axiale d'un profilé auquel deux autres profilés sont raccordés dans un même plan, suivant l'invention.

La Fig. 3 est une vue prise en regardant dans le sens de la flèche III sur la Fig. 2, le noeud d'assemblage ayant été complété ici par un autre profilé formant contrefiche.

Les Fig. 4 et 5 sont des vues schématiques montrant le mode d'adaptation d'éléments additionnels sur les profilés prévus suivant l'invention.

Le système d'assemblage suivant l'invention permet la réalisation d'ossatures ou de constructions métalliques légères à partir de profilés 1 constitués dans le cas present par des tubes 2 de section carrée portant sur leurs quatre faces des nervures creuses 3 à profil en queue d'aronde, ces profilés pouvant être fabriqués par exemple par extrusion en aluminium.

Pour une raison qui sera indiquée plus loin, les flancs des nervures en queue d'aronde prévus sur les faces du profil 1 sont inclinés à 45° par rapport aux côtés associés du tube 2. Ainsi, les flancs en regard des nervures de deux côtés adjacents ménagent entre eux une fente à côtés parallèles.

Ce système comprend également des pièces d'assemblage désignées par la référence 4 et comportant une partie d'accouplement constituée dans le cas présent par une patte 5 présentant un bord libre semi-circulaire et munie en son centre d'un trou 6, la base de cette patte étant solidaire d'une embase carrée formant butée 7 portant une queue 8 de préférence tubulaire, également de section carrée. Cette partie de la pièce d'assemblage peut être fabriquée par exemple par moulage en aluminium. La queue tubulaire 8 a une section droite telle qu'elle s'engage de préférence à force ou à frottement dur dans le tube de section carrée 2 des profilés 1. L'embase carrée formant butée 7 a en outre de préférence des dimensions correspondant à l'encombrement hors tout des profilés 1, c'est-à-dire que, dans la position d'assemblage, lorsque la queue 8 de la partie 4 de la pièce d'assemblage est emmanchée dans le tube 2 d'un profilé 1, les côtés de l'embase formant butée 7 se trouvent à l'affleurement des faces extérieures des nervures en queue d'aronde portées par les côtés du tube 2.

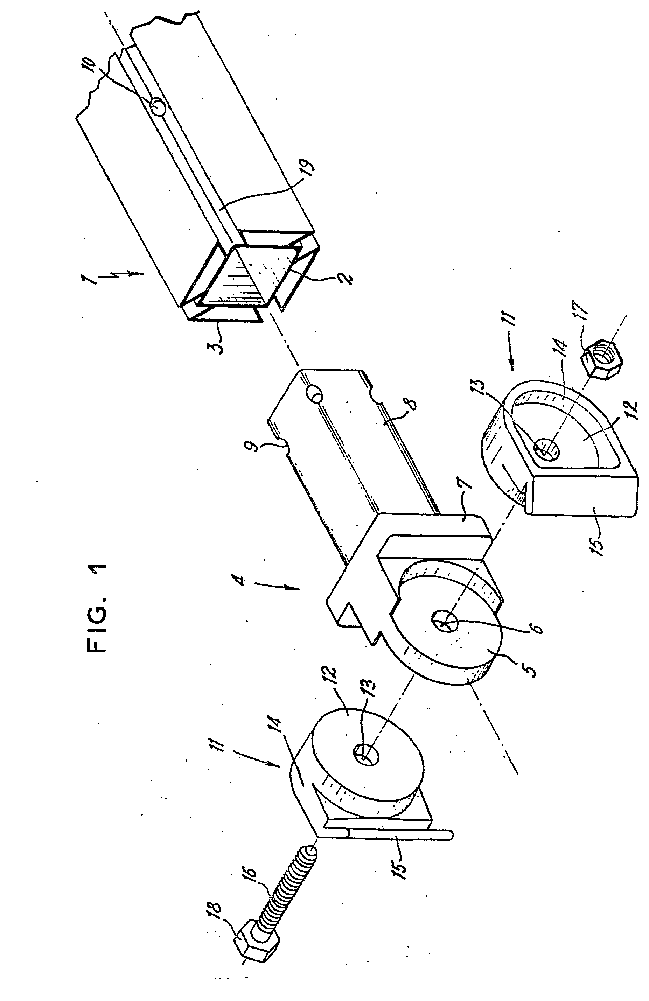

Selon le mode de réalisation représenté sur la Fig. 1, il est prévu dans la queue 8 de la pièce d'assemblage 4, et plus spécialement sur les arêtes de cette queue, des trous 9 qui, dans la position d'engagement de la queue 8 dans le tube 2 d'un profilé 1, viennent en coïncidence, lorsque l'embase formant butée 7 s'applique contre la face terminale du profilé, avec des trous 10 prévus comme indiqué dans ce profilé et débouchant sur les angles de celui-ci, au droit des fentes ménagées entre les nervures en queue d'aronde 3. Il est alors possible d'engager, dans les trous 10 et 9 alignés un axe ou une goupille assurant l'immobilisation de la pièce d'assemblage 4 sur l'extrémité du profilé.

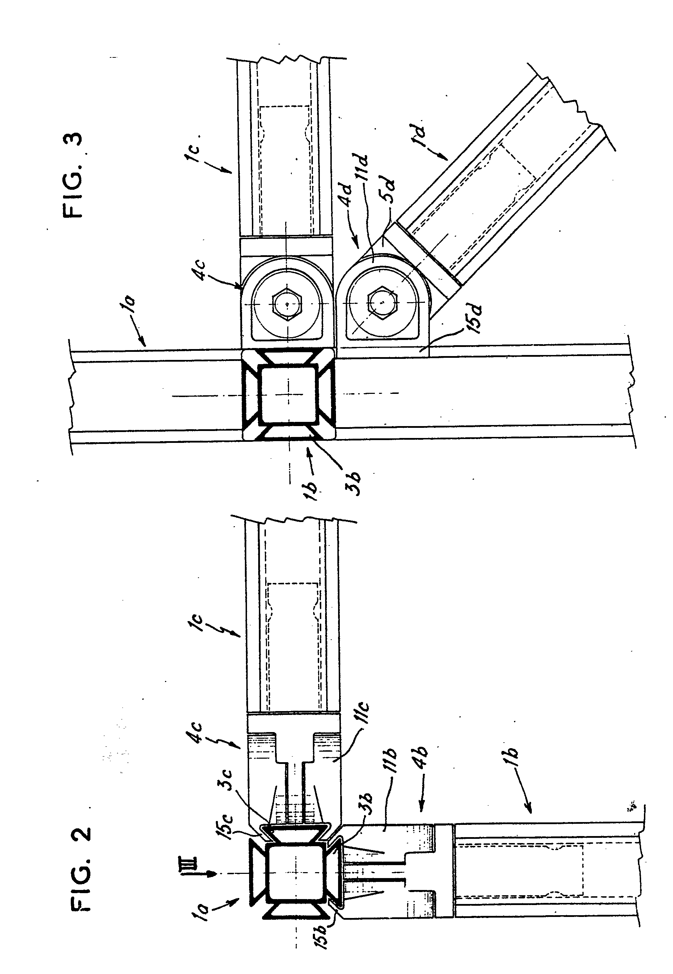

La pièce d'assemblage 4 est complétée, suivant le mode de réalisation considéré, par deux pinces désignées par la référence 11. Chaque pince comprend une partie en forme de cuvette munie d'un fond 12 percé en son centre d'un trou comme indiqué en 13 et d'un rebord périphérique 14 qui a sensiblement une forme semi-circulaire se prolongeant par deux parties rectilignes tangentielles, rejoignant une partie formant griffe 15. Cette partie formant griffe est, comme cela est mieux visible sur la Fig. 2, inclinée sensiblement à 45° par rapport au plan du fond 12 de la cuvette de la pince 11, c'est-à-dire que l'angle d'inclinaison des griffes correspond à l'angle d'inclinaison des flancs des nervures en queue d'aronde 3 des profilés 1.

Dans la position d'assemblage, les deux pinces 11 sont placées de part et d'autre de la patte 5, les fonds 12 des cuvettes reposant contre les faces latérales de cette patte. Le serrage est assuré au moyen d'un boulon 16 associé à un écrou 17. Dans la condition d'assemblage, la tête 18 de ce boulon 16 et l'écrou 17 se trouvent dans les dépressions des cuvettes des pinces 11, de sorte qu'ils ne font pas saillie par rapport au plan des faces extérieures de ces pinces 11.

Suivant le mode de réalisation considéré, les dimensions des pinces 11, qui sont également de préférence en aluminium, par exemple en aluminium moulé, sont telles que l'épaisseur totale des deux pinces 11 et de la patte 5 ne dépasse pas le gabarit correspondant à la section droite de l'embase 7 et, en conséquence, des profilés 1. La hauteur des pinces 11, c'est-à-dire en fait la hauteur des griffes 15, est également au plus égale à la dimension dans la direction considérée de l'embase carrée 7 et des profilés 1. Ainsi, l'ensemble des éléments d'assemblage est compris dans le gabarit en section droite des profilés 1, ce qui représente une particularité importante de l'invention.

L'épaisseur des griffes 15 inclinées à 45° est telle que deux griffes 15 appartenant à des pièces d'assemblage différentes puissent venir se loger l'une à côté de l'autre dans l'une des fentes 19 ménagées, comme indiqué sur la Fig. 1, entre les flancs en regard de deux nervures en queue d'aronde adjacentes du profilé 1.

Le mode d'utilisation du système se comprend aisément à la lecture de la description qui précède, puisqu'il suffit d'adapter les pinces sur une nervure d'un profilé dans la position voulue et d'assurer le serrage.

Les caractéristiques précitées de l'invention confèrent aux éléments d'assemblage décrits un caractère d'universalité remarquable. En effet, comme visible sur la Fig. 2, deux membrures d'une ossature métallique constituée par des profilés 1 peuvent être assemblées dans un même plan avec un autre profilé 1 formant par exemple un montant de cette ossature.

On a illustré sur la Fig. 2, que l'on supposera être une vue en plan, un profilé 1a constitué par exemple par un montant d'ossature. Un premier profilé 1b est adapté par sa pièce d'assemblage 4b sur une nervure en queue d'aronde 3b de ce profilé 1a, l'assemblage étant réalisé par serrage des pinces 11b et des griffes 15b de part et d'autre de cette nervure en queue d'aronde, au moyen du boulon et de l'écrou conjugués.

Un second profilé 1c peut être monté dans le même plan que le profilé 1b, et il peut être accouplé au même profilé 1a au moyen de sa pièce d'assemblage 4c et des griffes 15c. Les dimensions respectives des griffes 15b et 15c leur permettent en effet de venir se placer dans une relation de juxtaposition à l'intérieur de la fente qui sépare les nervures en queue d'aronde 3b et 3c sur lesquelles l'assemblage est réalisé.

Il va de soi que l'on pourrait tout aussi bien raccorder au même montant 1a trois ou quatre profilés 1, toujours dans un même plan. Il va de soi également que ce montant 1a pourrait être remplacé par une membrure horizontale, les autres profilés se trouvant alors orientés soit verticalement, soit horizontalement.

Dans le cas d'une ossature métallique, ceci permet par exemple de définir, à l'aide de plusieurs profilés, des plans horizontaux ou verticaux pouvant recevoir par exemple des plates-formes, des passerelles ou des panneaux. Ce résultat est obtenu sans devoir utiliser de raccords composites complexes, à partir des mêmes éléments de base qui sont employés pour le raccordement d'un seul profilé à un autre profilé.

On a montré sur 1a Fig. 3, qui est une vue prise en regardant dans la direction de la flèche III en Fig. 2, la disposition particulière des profilés 1b et 1c, qui définissent ici un plan horizontal.

Cette Fig. 3 montre également un profilé additionnel 1d, qui est incliné vers le bas à partir du noeud d'assemblage réalisé, pour servir par exemple de contrefiche.

L'orientation d'un profilé par rapport à un autre de la manière indiquée sur la Fig. 3 est rendue possible par la forme en principe semi-circulaire des pattes d'accouplement 5 et des pinces 11. Il est en effet possible d'obtenir, de la manière indiquée, un blocage des griffes 15d sur la nervure en queue d'aronde conjuguée 3c du profilé 1a, tandis que la patte d'accouplement 5d est inclinée par rapport à ces griffes, le blocage étant ici encore réalisé au moyen du boulon et de l'écrou associés à la pièce d'assemblage. Compte tenu des dimensions relatives des différentes éléments du système, on voit à l'examen de la Fig. 3 que la pièce d'assemblage 4d associée au profilé 1d peut être étroitement accolée à la pièce d'assemblage 4c portée par le profilé 1c.

Comme indiqué précédemment, les pinces 11 prévues suivant l'invention peuvent être utilisées pour le raccordement à un profilé d'autres éléments incorporés à une ossature ou construction métallique légère. Ces autres éléments sont alors réalisés sous la forme de parties plates ayant une épaisseur égale à celle des pattes d'accouplement 5 des pièces d'assemblage, et ils peuvent être constitués, par exemple, par des goussets ou parties équivalentes permettant la fixation sur un profilé d'une plate-forme, d'une passerelle, d'une marche d'escalier ou d'un autre élément de l'ossature ou de la construction.

La présence de nervures en queue d'aronde 3 sur chaque face des profilés 1 offre encore d'autres possibilités.

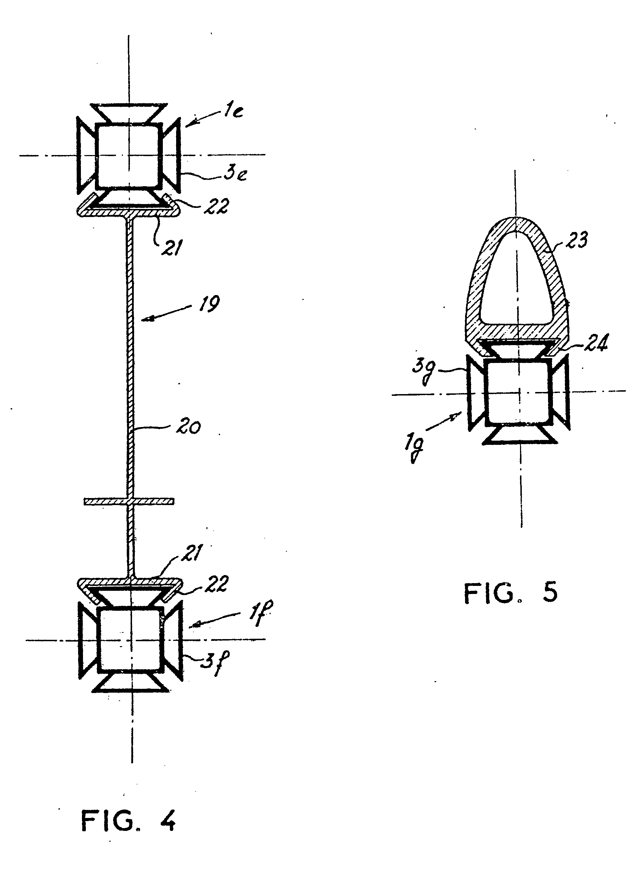

Si l'on se reporte à la Fig. 4, on voit qu'on a représenté par exemple un élément raidisseur 19 prévu entre deux profilés 1e et 1f. Cet élément comporte ici une âme 20, qui peut avoir toute largeur désirée et qui porte à chaque extrémité une aile 21 munie elle-même de rebords 22 définissant une section en queue d'aronde complémentaire de la forme en queue d'aronde des nervures 3 des profilés. Cet élément formant raidisseur 19 peut ainsi être adapté par coulissement entre deux profilés d'une ossature suivant l'invention.

Une autre possibilité encore est représentée sur la Fig. 5, qui montre une pièce en caoutchouc formant butoir 23, munie vers son bord inférieur de rebords 24 ménageant un profil en queue d'aronde complémentaire de celui des nervures 3g du profilé 1g.

On comprendra que bien d'autres éléments encore sont concevables en vue d'une adaptation sur les profilés décrits ci-avant.

On voit que, comme indiqué, le système d'assemblage suivant l'invention présente un caractère d'universalité remarquable, en permettant la réalisation de nombreux types d'ossatures et de constructions légères à partir d'un très petit nombre de pièces, seuls les profilés devant être coupés à longueur pour cette réalisation. S'il s'agit d'une construction temporaire, tous les éléments peuvent également être récupérés et leur résistance à la corrosion, s'ils sont en aluminium, permet leur réutilisation.

Des modifications peuvent être apportées aux modes de réalisation décrits, dans le domaine des équivalences techniques, sans s'écarter de l'invention.

## Revendications

1. Système d'assemblage pour la réalisation d'ossatures et de constructions métalliques légères, comprenant des profilés creux (1) munis sur chacune de leurs faces d'un profile (3) en queue d'aronde et des éléments d'assemblage en forme de pinces (11) destinés à venir enserrer les profils (3) en queue d'aronde pour l'assemblage, en s'appliquant des deux côtes d'un tel profil (3) en queue d'aronde, ces pinces étant supportées par une pièce d'assemblage (4) dont une extrémité en forme de queue (8) peut s'emboîter dans la cavité intérieure d'un autre élément ou profile (1) de l'ossature ou de la construction, caractérisé en ce que cette queue (8) porte une patte d'accouplement (5) de part et d'autre de laquelle les pinces (11) réalisant l'assemblage avec un profilé sont serrées au moyen d'un boulon (16) ou élément analogue, ces pinces étant orientables par rapport à cette patte d'accouplement autour de l'axe de ce boulon pour permettre des assemblages entre les profilés selon toute relation angulaire désirée.

2. Système d'assemblage suivant la revendication 1, caractérisé en ce que la patte d'accouplement (5) de la pièce d'assemblage (4) ménage sur chacune de ses faces une portée de forme circulaire, et les pinces (11) présentent une partie de forme circulaire par laquelle elles s'appliquent sur ces faces de la patte d'accouplement pour permettre l'assemblage entre les profilés dans toute relation angulaire désirée.

3. Système d'assemblage suivant la revendication 1 ou 2, caractérisé en ce que les pièces d'assemblage (4) sont dimensionnées de telle sorte que la patte d'accouplement (5) et les pinces (11) soient comprises en totalité dans la section droite globale des profilés.

4. Système d'assemblage suivant la revendication 3, caractérisé en ce que chaque pièce d'assemblage (4) comporte une partie en forme de collet (7) portant d'un côté la queue (8) et de l'autre côté la patte d'accouplement (5) et servant de butée lors de l'engagement de cette queue dans la cavité d'un profilé (1), ce collet étant compris dans le gabarit etérieur dudit profilé (1).

5. Systéme d'assemblage suivant l'une quelconque des revendications précédentes, caractérisé en ce que les pinces (11) sont constituées par des pièces en forme de cuvettes (14) munies d'au moins une griffe (15), les fonds (12) des cuvettes de deux pinces conjuguées venant s'appliquer de part et d'autre de la patte d'accouplement (5) d'une pièces d'assemblage (4), la tête et l'écrou du boulon d'assemblage (16, 17, 18) ou élément analogue étant logés dans les dépressions des cuvettes sans faire saillie par rapport à l'encombrement en section droite des profilés (1).

6. Système d'assemblage suivant la revendication 5, caractérisé en ce que les griffes (15) des pinces (11) sont profilées et dimensionnées par rapport aux fentes séparant les profils en queue d'aronde adjacents (8) d'un profilé (1) de telle sorte que les griffes de deux pinces juxtaposées associées à des pièces d'assemblage et à des profilés différents puissent s'engager à un même niveau dans lesdites fentes.

7. Système d'assemblage suivant l'une quelconque des revendications précédentes, caractérisé en ce que les profilés (1) ont une section droite carrée et présentent une cavité intérieure également de forme carrée.

8. Système d'assemblage suivant l'une quelconque des revendications précédentes, caractérisé en ce qu'il comporte en outre des éléments tels que des pièces formant raidisseurs, des butoirs, mains-courantes ou éléments profilés équivalents, présentant des parties femelles (21, 22, 24) à section en queue d'aronde engageables sur les profils ou nervures en queue d'aronde (3) des profilés (1).

9. Ossatures et constructions métalliques légères, caractérisées en ce qu'elles sont réalisées à partir d'un système d'assemblage suivant l'une quelconque des revendications 1 à 8.

**Patentansprüche**

1. Montagesystem für den Aufbau von Leichtmetall-Gerüsten und von Konstruktionen, die Hohlprofile (1) aufweisen, die auf jeder Seitenfläche ein Schwalbenschwanzprofil (3) sowie Montageelemente in Form von Klemmbacken (11) besitzen, die dazu bestimmt sind, die Schwalbenschwanzprofile (3) für den Zusammenbau einzufassen, indem sie sich von beiden Seiten auf einem derartigen Schwalbenschwanzprofil (3) abstützen, wobei die Klemmbacken durch ein Montageteil (4) gestützt werden, wo von ein Endabschnitt in Form eines Schafts (8) in einen inneren Hohlraum eines anderen Elements oder Profils des Gerüsts (1) oder der Konstruktion eindringen kann, dadurch gekennzeichnet, dass der Schaft (8) einen Ankopplungsfortsatz (5) trägt, von dessen beiden Seiten her die Klemmbacken (11), die den Zusammenbau mit einem Profil bewerkstelligen, mittels eines Schraubenbolzens (16) oder dergleichen festgeklemmt sind, wobei diese Klemmbacken in bezug auf den Ankopplungsfortsatz um die Achse des Schraubbolzens herum einstellbar sind, um die Profile in jeder gewünschten Winkelzuordnung zueinander montieren bzw. festlegen zu können.

2. Montagesystem nach Anspruch 1, dadurch gekennzeichnet, dass der Ankopplungsfortsatz (5) des Montageteils (4) auf seinen beiden Seitenflächen eine Lagerung mit kreisförmiger Gestaltung bzw. Form ausbildet und die Klemmbacken (11) einen kreisförmigen Abschnitt aufweisen, durch den sie sich gegen die Seitenflächen des Ankopplungsfortsatzes stützen, um die Profile in jeder gewünschten Winkelzuordnung aneinander montieren zu können.

3. Montagesystem nach Anspruch 1 oder 2, dadurch gekennzeichnet, dass die Montageteile (4) so bemessen sind, dass der Kopplungsfortsatz (5) und die Klemmbacken (11) völlig innerhalb der Einhüllenden des Querschnitts der Profile liegt.

4. Montagesystem nach Anspruch 3, dadurch gekennzeichnet, dass jedes Montageteil (4) einen Teil in Form eines Kragens aufweist, der auf einer Seite den Schaft (8) und auf der anderen Seite den Ankopplungsfortsatz (5) trägt un beim Hineinstecken des Schafts in den Hohlraum eines Profils (1) als Anschlagfläche dient, wobei dieser Kragen (7) im äusseren Umriss des Profils (1) mit eingeschlossen ist.

5. Montagesystem nach einem der vorhergehenden Ansprüche, dadurch gekennzeichnet, dass die Klemmbacken (11) von schalenförmigen Teilen (14) gebildet werden, die mit mindestens einem Klemmfortsatz (15) versehen sind, wobei sich die Böden (12) der Schalen zweier verbundener Klemmfortsätze von beiden Seiten auf den Ankopplungsfortsatz (5) eines Montageteils (4) stützen, wobei der Schraubenkopf und die Mutter des Montage-Schraubenbolzens (16, 17, 18) oder dergleichen in den Vertiefungen der Schalen angeordnet sind, ohne aus der Einhüllenden des Querschnitts der Profile (1) herauszuragen.

6. Montagesystem nach Anspruch 5, dadurch gekennzeichnet, dass die Klemmfortsätze (15) der Klemmbacken (11) bezüglich der Spalten, die die benachbarten Schwalbenschwanzprofile (8) eines Profilelements voneinander trennen, so profiliert und dimensioniert sind, dass die Klemmfortsätze zweier Klemmbacken, die nebeneinander mit verschiedenen Montageteilen und Profilen (8) verbunden sind, auf gleichem Niveau in die Spalten eingefügt werden können.

7. Montagesystem nach einem der vorhergehenden Ansprüche, dadurch gekennzeichnet, dass die Profile (1) Rechteckquerschnitt besitzen und einen ebenfalls rechteckigen inneren Hohlraum aufweisen.

8. Montagesystem nach einem der vorhergehenden Ansprüche, dadurch gekennzeichnet, dass es ausserdem Element aufweist, wie z.B. Versteifungselemente, Anschläge, Geländerstangen oder ähnlich profilierte Elemente, die nutenförmige Abschnitte (21, 22, 24) mit Schwalbenschwanzquerschnitt aufweisen, die mit Schwalbenschwanz-Profilen oder -Rippen in Eingriff bringbar sind.

9. Leichtmetall-Gerüst oder Konstruktion, dadurch gekennzeichnet, dass sie unter Verwendung eines Montagesystems nach irgendeinem der Ansprüche 1 bis 8 aufgebaut wird.

## Claims

1. Assembly system for making frameworks and light metal constructions, comprising hollow shaped pieces (1) which are provided on each of their faces with a dovetail profile (3), and pincer-shaped assembly elements (11) intended to grip the dovetail profiles (3) for assembly by applying themselves on the two sides of such a dovetail profile (3), these pincers being supported by an assembly piece (4), one stem-shaped end (8) of which can fit into the inner cavity of another element or shaped piece (1) of the framework or of the construction, characterised in that this stem (8) supports a coupling lug (5), on either side of which the pincers (11) effecting the assembly with a shaped piece are gripped by means of a bolt (16) or a similar element, these pincers being adjustable in relation to this coupling lug about the axis of this bolt so as to permit assembly between the shaped pieces in any angular relationship desired.

2. Assembly system according to claim 1, characterised in that the coupling lug (5) of the assembly piece (4) has a circular bearing on each of its faces, and the pincers (11) have a circular part, via which they apply themselves on these faces of the coupling lug so as to permit assembly between the shaped pieces in any angular relationship desired.

3. Assembly system according to claim 1 or 2, characterised in that the assembly pieces (4) are dimensioned in such a way that the coupling lug (5) and the pincers (11) are encompassed completely within the overall cross-section of the shaped pieces.

4. Assembly system according to claim 3, characterised in that each assembly piece (4) possesses a collar-shaped part (7) which supports on one side the stem (8) and on the other side the coupling lug (5) and which serves as a stop during engagement of this stem into the cavity of a shaped piece (1), this collar being encompassed within the external outline of said shaped piece (1).

5. Assembly system according to any one of the preceding claims, characterised in that the pincers (11) consist of dish-shaped pieces (14) provided with at least one claw (15) and the bottoms (12) of the dishes of the two matching pincers apply themselves on either side of the coupling lug (5) of an assembly piece (4), the head and the nut of the assembly bolt (16, 17, 18) or similar element being accommodated in the depressions of the dishes, without projecting in relation to the cross-sectional bulk of the shaped pieces (1).

6. Assembly system according to claim 5, characterised in that the claws (15) of the pincers (11) are profiled and dimensioned in relation to the slits separating the adjacent dovetail profiles (8) of a shaped piece (1), in such a way that the claws of two pincers placed next to one another and associated with different assembly pieces and different shaped pieces can engage at one and the same level into said slits.

7. Assembly system according to any one of the preceding claims, characterised in that the shaped pieces (1) have a square cross-section and possess an inner cavity which is also square.

8. Assembly system according to any one of the preceding claims, characterised in that it also contains elements such as pieces forming stiffeners, buffers, hand-rails or equivalent shaped elements, which have female parts (21, 22, 24) with a dovetail cross-section engageable on the dovetail profiles or ribs (3) of the shaped pieces (1).

9. Frameworks and light metal constructions, characterised in that they are made from an assembly system according to any one of claims 1 to 8.

# FIG. 1

0008 555

FIG. 2

FIG. 3

FIG. 4

FIG. 5